(19) **Europäisches Patentamt**

**European Patent Office**

**Office européen des brevets**

(11) **EP 0 855 806 B1**

(12) **EUROPÄISCHE PATENTSCHRIFT**

(45) Veröffentlichungstag und Bekanntmachung des Hinweises auf die Patenterteilung:
**25.08.2004 Patentblatt 2004/35**

(51) Int Cl.⁷: $H04B\ 3/20$, $H04B\ 3/23$

(21) Anmeldenummer: **98100558.0**

(22) Anmeldetag: **14.01.1998**

(54) **Echosperre für ein Spracheingabe Dialogsystem**

Echo suppressor for the speech input of a dialogue system

Suppresseur d'écho pour l'entrée par voix d'un système de dialogue

(84) Benannte Vertragsstaaten:
**DE FR GB SE**

(30) Priorität: **22.01.1997 DE 19702117**

(43) Veröffentlichungstag der Anmeldung:
**29.07.1998 Patentblatt 1998/31**

(73) Patentinhaber: **SIEMENS AKTIENGESELLSCHAFT**
**80333 München (DE)**

(72) Erfinder:
• **Höge, Harald, Dr.**
**82131 Gauting (DE)**
• **Miksic, Andrej**
**2000 Maribor (SI)**

(56) Entgegenhaltungen:
**EP-A- 0 443 547** **US-A- 5 526 426**

**Beschreibung**

Die Erfindung bezieht sich auf eine Subbandechosperre für ein Mensch-/Maschine-Dialogsystem. Im Gegensatz zu Echounterdrückungsverfahren, welche in Mensch- zu Mensch-Übertragungssystemen benutzt werden, wo Echos welche bei Telefongesprächen auf der Übertragungsstrecke auftreten, in den zentralen Vermittlungsstellen unterdrückt werden und wo akustische Echos, die beim Freisprechen auftreten, unterdrückt werden, besteht der Zweck einer Echosperre, die in einem Mensch-/Maschine-Dialogsystem benutzt wird darin, dem Sprecher einen bedienerfreundlicheren Umgang mit der Maschine zu gestatten. Der Sprecher äußert sich beispielsweise bei einer Eingabe, ohne dabei auf die Systemeingabeaufforderung der Maschine gewartet zu haben.

Derartige Echosperren sind bereits aus dem Stand der Technik bekannt. Aus den Proceedings of Acoustical Society of Japan, Spring Meeting, March 1992, Seiten 1-21; Y. Nagata et al.: "Cancelling of synthetic speech for a real-time speech dialogue system" oder aus den Proceedings zur European Conference on Speech Communication and Technology, Madrid, September 1995, Seiten 149 bis 152; R.PACIFICI et al.: "Echo cancelling in Speech Recognition Systems" sind derartige Echosperren bekannt. Zur Unterdrückung des von der Eingabeaufforderung des Spracheingabesystems hervorgerufenen Echos, welches bei der Spracherkennung stören würde, werden adaptive Filter eingesetzt, um ein Abbild des Echosignales zu erzeugen und dieses vom eingehenden Sprachsinal zu subtrahieren. Dabei wird der Restfehler des Signals dann verwendet, um die Koeffizienten des Echounterdrückungsvektors zu bestimmen, indem der quadratische Mittelwert des Ausgangsfehlers minimiert wird und zwar geschieht dies in solchen Zeitabschnitten von denen bekannt ist, daß kein Sprachsignal vom Sprecher vorliegt.

Derartige Echosperren sind wirksam, wenn es darum geht, Nahbereichsechos, die durch die Gabelschaltung des Telefons erzeugt werden, zu unterdrücken. Diese Echosperren haben jedoch Nachteile, wenn es darum geht, Echoreplikate von Echos zu erzeugen, die auf Fernverbindungen in Mensch-/Maschine-Dialogsystemen entstehen. Insbesondere bestehen dann Schwierigkeiten, ausreichend schnell die hohe Rechenkapazität zur Verfügung zu stellen, die erforderlich ist, um Echos zu sperren, die mit mehreren 10 ms Verspätung auftreten. Falls beispielsweise der Echopfad 50 ms beträgt und die Systemeingabeaufforderung und das empfangene Sprachsignal mit einer Abtastrate von 8 kHz abgetastet werden, so muß die Echosperre eine Filterung mit 400 Anzapfstellen durchführen. Ebenfalls muß der Adaptionsalgorithmus die Aktualisierung der Koeffizienten des Echosperrvektors mit einer Länge von 400 mit der Abtastrate durchführen. In diesem Beispiel muß das 8000 mal pro Sekunde geschehen. Die hohe mathematische Komplexität des Verfahrens und die langsame Konvergenz wirken sich dabei nachteilig in Bezug auf die geforderten Echtzeitbedingungen aus.

Aus W. Kellermann: "Kompensation akustischer Echos in Frequenzteilbändern", Frequenz, Vol. 39, 1985, No. 7-8, Seite 209 bis 215, ist eine adaptive Subbandfilterung bekannt, bei der ein Sprachsignal in mehrere untersamplete Frequenzbänder unterteilt wird und im Anschluß einem NLMS Algorithmus basierenden adaptiven Filter durchläuft. Dort wird jedoch dieser Subbandansatz lediglich verwendet, um Echos zu sperren, welche in einem Raum durch ein Lautsprechermikrophonsystem hervorgerufen werden, um ein besseres Freisprechen und Teleconferencing zu ermöglichen.

Eine Echosperre für Mensch-/Maschine-Dialogsysteme muß bestimmte Erfordernisse erfüllen. Sie sollte durch ihre Bearbeitung des Sprachsignales keinen wesentlichen zusätzlichen Rechenaufwand bei einem Spracherkenner bewirken. Ebenfalls sollte eine Verschlechterung der Erkennungsleistung des Spracherkenners vermieden werden.

Der Erfindung liegt also die Aufgabe zugrunde, eine Echosperre für Spracheingabedialogsysteme und ein Verfahren zu deren Betrieb anzugeben, die die Spracherkennungsleistung eines Spracherkenners nicht verschlechtern und die keinen wesentlichen zusätzlichen Rechenaufwand bei der Spracherkennung bewirken.

Diese Aufgabe wird für die Echosperre gemäß den Merkmalen des Patentanspruches 1 und für ihr Betriebsverfahren gemäß den Merkmalen des Patentanspruches 7 gelöst.

Weiterbildungen der Erfindung ergeben sich aus den abhängigen Ansprüchen.

Im folgenden werden die Erfindung und Vorteile der Erfindung anhand von Ausführungsbeispielen weiter erläutert.

Figur 1    zeigt ein Ausführungsbeispiel einer Echosperre aus dem Stand der Technik.

Figur 2    zeigt ein Ausführungsbeispiel einer erfindungsgemäßen Echosperre.

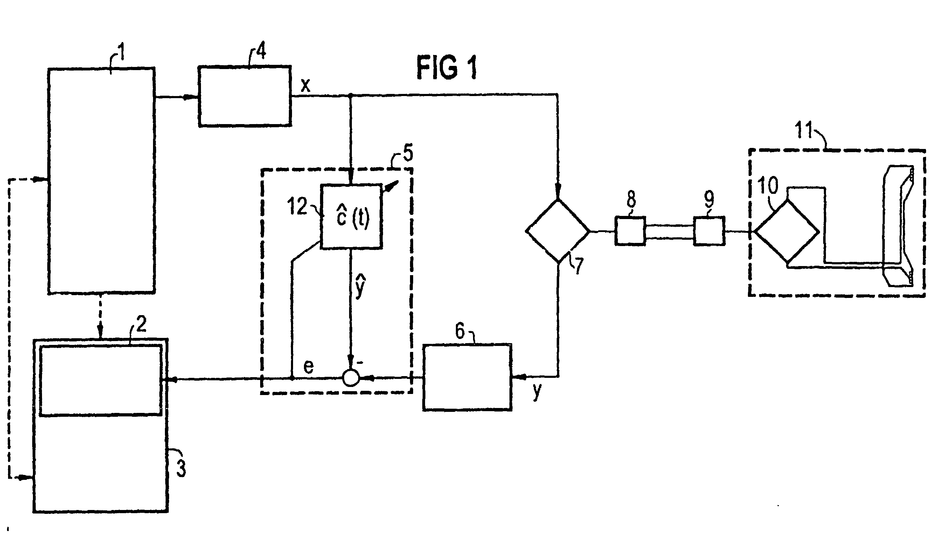

In Figur 1 ist ein telefonbasierendes Spracheingabesystem dargestellt, welches mit einer Echosperre ausgestattet ist. Das Blockdiagramm in Figur 1 zeigt dabei ein Mensch/Maschine-Dialogsystem mit einer adaptiven Echosperre. Der Ablauf des Mensch-/Maschine-Dialogs wird dabei von Dialogsteuermitteln 1 gesteuert, indem diese eine Systemeingabeaufforderung 4 abgibt und ebenfalls einen automatischen Spracherkenner 3 steuert. Das Systemeingabeaufforderungsignal erreicht das Telefon eines Benutzers 11 durch die Gabelschaltung 7 über die beiden Vermittlungsstellen 8 und 9 auf beiden Seiten eines Telefonnetzes. Wegen der Echos, welche in den Gabelschaltungen 7 und 10 erzeugt werden, enthält ein Sprachsignal, das abgetastet wird und einer Merkmalsextraktionsstufe 2 des Spracherkenners 3 zugeführt wird, nicht nur das Sprachsignals des Benutzers, sondern ebenfalls das Echosignal der Systemeingabeaufforderung, welches die Erkennungsleistung des Spracherkenners 3 verschlechtert.

Um ein Abbild des Echosignales $y$ zu erzeugen, wird ein adaptiver Filter 12 verwendet, welcher adaptiv die Echosperrkoeffizienten $\underline{C}$ des Echosperrvektors 12 einstellt, der in diesem Fall als Finite Impulse Response Filter (FIR) arbeitet. Zur Ausfilterung des Echos vom Eingabeaufforderungssignal wird das Ausgangssignal des Filters $\hat{y}$, welches einer Annäherung des Echosignales entspricht von dem empfangenen Sprachsignal y abgezogen. Hierdurch wird lediglich dem reinen Sprachsignalanteil des empfangenen Sprachsignales erlaubt, in den Spracherkenner 3 zu gelangen. Das Restfehlersignal e wird verwendet, um die Koeffizienten des Echosperrvektors derart einzustellen, daß der Mittelwert des quadrierten Ausgangsfehlers minimiert wird. Dies geschieht in solchen Zeitscheiben, von denen bekannt ist, daß kein Spracheingabesignal vom Benutzer abgegeben wird.

Derartige Echosperren sind geeignet, um effizient Nahbereichechos, welche durch Telefongabelschaltungen 7 erzeugt werden, zu unterdrücken. Diese Echosperren aus dem Stand der Technik zeichnen sich jedoch durch anwachsende Rechenlast und langsame Konvergenz bei der Erzeugung von Abbildern des Echos y aus, falls ein System zur Spracheingabe benutzt wird, das über lange Strecken bedient wird. Dabei können die Weitbereichsechos, welche in der Gabelschaltung 10 erzeugt werden mehrere 10 ms verzögert werden. Liegt als Beispiel ein Echopfad von 50 ms vor und werden die Systemeingabeaufforderungen, sowie das empfangene Sprachsignal mit einer Abtastrate von 8 kHz abgetastet, so muß die Echosperre eine Filterung mit Hilfe von 400 Anzapfstellen durchführen. Ebenfalls muß der Adaptionsalgorithmus die Koeffizienten des Echosperrvektors mit einer Länge von 400 gemäß der Abtastrate durchführen. Im gewählten Beispiel bedeutet dies, daß die 400 Koeffizienten 8000 mal pro Sekunde adaptiert werden müssen.

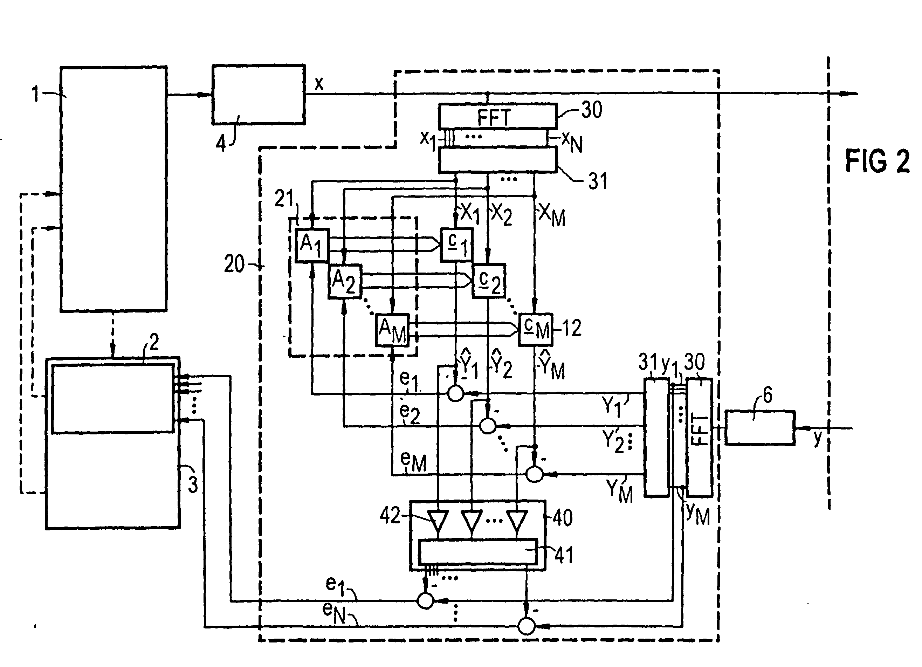

In Figur 2 ist ein Ausführungsbeispiel einer erfindungsgemäßen Echosperre dargestellt. Sie zeigt ein Blockdiagramm eine Ausführungsform einer adaptiven Sub-Band-Echosperre für ein Mensch-/Maschine-Telefondialogsystem. Dabei durchlaufen eine Systemeingabeaufforderung 4 ebenso wie das empfangene Sprachsignal 6 Fast-Fourier-Transformationsmittel 30 und Bandreduktionsmittel 31 wodurch sich eine Vielzahl $X_i$ und $Y_i$ von M Subbandsignalen ergibt, die mit einer reduzierten Abtastrate abgetastet werden. Der Verringerungsfaktor R für die Abtastrate wird dabei bevorzugt aus dem Abstand benachbarter Signalrahmen bestimmt, mit dem diese die Fast-Fourier-Transformationsmittel 30 durchlaufen.

Bevorzugt werden die Vektoren der Subbänder in M parallele adaptive Filter 12 eingegeben. Adaptionsmittel 21 in den jeweiligen M parallelen Filtern führen dabei gemäß dem NLMS-Algorithmus die Adaption der adaptiven Filter in der Art durch, wie der Algorithmus im Stand der Technik von Kellermann beschrieben ist. Diese Subbandstruktur bei der Echosperre weist dabei folgende Vorteile auf:
Die rechnerische Komplexität des Problems wird wesentlich reduziert, da durch die reduzierte Abtastrate die Konvergenz in den Adaptionsmitteln schneller erreicht wird, wenn der NLMS-Algorithmus zur Adaption verwendet wird.

Im Idealfall wird der Abtastreduktionsfaktor R so groß wie möglich gewählt und die Anzahl der Kanäle M für die Subbänder wird gemäß R und gemäß der Sperrdämpfung des Durchlaßbereiches der Analysefilter gewählt, die die Vektoren der Subbandsignale erzeugen.

Für gewöhnlich führt die Merkmalsextraktionsstufe 2 des Spracherkenners 3 in einem Spracheingabesystem die Fast-Fourier-Transformation des empfangenen Sprachsignales 6 als Teil einer Merkmalsextraktionsprozedur durch. Aus diesem Grund weist die Erfindung Mittel zur Aufteilung in Subbänder auf, welche die Fast-Fourier-Transformation benutzen, um einen Vektor von Subbändern $\underline{X}$ zu erzeugen. Um jedoch die Anforderungen an die Rechenkapazität, die durch die Subbandechosperre erzeugt wird, zu reduzieren und eine kritische Sperrbereichsdämpfung, die für die Anwendung des NLMS Adaptionsfilteralgorithmus in den Subbandaufteilungsmitteln erforderlich ist, zu gewährleisten, ist weiterhin ein Bandreduktionsmittel 31 vorgesehen, mit dem die Anzahl der Subbänder von N nach der Fast-Fourier-Transformation, auf M nach der Bandreduktion reduziert wird. Auf diese Weise wird der Subbandechosperre eine reduzierte Anzahl von Bändern M zugeführt, um die Echosperre durchzuführen. Diese Vorgehensweise ist erfindungsgemäß zulässig, da keine Notwendigkeit besteht, das Originalsignal aus den N Subbandsignalen wieder aufzubauen. Die Anzahl der Subbandkanäle kann sogar kleiner als der Reduktionsfaktor der Abtastrate R gewählt werden, ohne die Konvergenz des NLMS Algorithmus zu behindern. Um die spektrale Auflösung des empfangenen Signales zu konservieren muß jedoch das Kurzzeitmagnitudenspektrum des empfangenen Signales, welches durch die Fast-Fourier-Transformationsmittel 30 erzeugt wird der Merkmalsextraktionsstufe 2 zugeführt werden, damit die Einflüsse der Echoenergien von jeder der N Frequenzkomponenten d. h. der Betragsspektrumkomponenten subtrahiert werden. Um dies zu erreichen, sind erfindungsgemäß Bandwiederherstellungsmittel 40 vorgesehen, die aus der reduzierten Anzahl N der geschätzten Subbandechoenergien geschätzte Echoeinflüsse von jedem der N Originale, also der ursprünglich in die Fast-Fourier-Transformationsstufe 30 eingehenden Subbandsignale, zu erzeugen.

Das Verfahren zur Erzeugung einer geringeren Anzahl von Subbändern 31 und der Bandwiederherstellung 40 wird im folgenden weiter beschrieben.
Bei der Bandreduktion 31 wird eine Zuordnung einer Menge von N Frequenzkomponenten $\{x_k, k = 1...N\}$ auf M Sub-

bandsignale $\{X_i, i = 1..M\}$ wobei gilt $M < N$. Die Zuordnung der Indizes wird beispielsweise durch eine Zuordnungstabelle $i = i(k)$ festgelegt, welche über die Zuordnung definiert welche Frequenzkomponenten $x_k$ für die Zuordnung zu den jeweiligen Subbandsignalen $X_i$ verwendet werden. Die Beträge der Subbandsignale $X_i$ werden bevorzugt nach der folgenden Formel bestimmt

$$X_i = \sqrt{\sum_k x_k^2} \qquad (1)$$

Dabei wird die Summe über alle Frequenzkomponenten $X_k$ gebildet, die in ein Band i gemäß der Zuordnung $i = i(k)$ nach der Zuordnungstabelle fallen. Jedes Subband i hat beispielsweise eine Breite $w_i$, welche der Zahl ihrer Frequenzkomponenten, die in das Subband $X_1$ abgebildet werden, entspricht. Werden beispielsweise die Frequenzkomponenten $X_4$, $X_5$, $X_6$ und $X_7$ in einem Subband $X_2$ zusammengefaßt, dann beträgt die Breite $w_2 = 4$. Der Eintrag in der Zuordnungstabelle würde dann beispielsweise $i(4)=i(5)=i(6)=i(7)=2$ lauten. Für andere Frequenzbänder kann die Zuordnung entsprechend durchgeführt werden.

Die Bandwiederherstellung 40 wird beispielsweise durchgeführt, indem die Subbandsignale $\hat{Y}_i$, welche den geschätzten Echobeträgen des Bandes i entsprechen, Dämpfungsmittel 42 durchlaufen, welche beispielsweise die Subbandsignale des Bandes i mit dem Faktor

$$\frac{1}{\sqrt{w_i}} \qquad (2)$$

multiplizieren, wobei $w_i$ die Breite des Subbandes ist, wie sie oben beschrieben wurde. Der inverse Zuordner 41, welcher die Bandwiederherstellung durchführt, rekonstruiert nun die originalen, ursprünglich dem Verfahren zugeführten, N Frequenzkanäle gemäß der inversen Zuordnung, die in der Indexzuordnungstabelle mit $i=i(k)$ festgelegt wurde. Dabei ist klar, daß die Indexzuordnung $i=i(k)$ nicht eine bijektive 1:1 Zuordnung ist, so daß die inverse Zuordnung in einem mathematischen Sinn nicht existiert. Für das erfindungsgemäße Verfahren reicht die Zuordnung jedoch aus, da die Zuordnungstabelle $i=i(k)$ eindeutig definiert, welcher Index i auf welche verschiedenen Indizes k zu kopieren ist.

Damit ergeben sich die Betragsspektralkomponenten, welche dem Erkenner 3 zugeführt werden zu

$$e_k = y_k - \frac{\hat{Y}_{i(k)}}{\sqrt{w_{i(k)}}} \qquad (3)$$

wobei i(k) die oben bezeichnete Zuordnungstabelle angibt und $k = 1...N$ gilt.

Dem Fachmann ist klar, daß er diese Erfindung sowohl in Hardware als auch in Software implementieren kann, wobei diese Software beispielsweise einen digitalen Signalprozessor ansteuert. Ebenso sind andere Ausführungsformen als Gemisch von Hardware und Software und Firmware für den Fachmann leicht denkbar und realisierbar.

Beispielsweise ist denkbar, daß nicht mehrere Fast Fourier Transformationsmittel 3 eingesetzt werden, sondern lediglich eines, das sehr schnell arbeitet und die Bandreduktionsmittel 31 für das Sprachsignal 6, y und die Systemeingabeaufforderung 4, x, gemeinsam bedient.

## Patentansprüche

**1.**  Echosperre für ein Spracheingabedialogsystem mit folgenden Merkmalen:

    a) es sind Fast-Fourier-Transformationsmittel (30) vorgesehen, um Kurzzeitbetragsspektren von mindestens einer Systemeingabeaufforderung (4) und einem eingegebenen Sprächsignal (6) zu bilden;
    b) es sind Bandreduktionsmittel (31) vorgesehen, denen die Kurzzeitbetragsspektren zugeführt werden, um aus den Frequenzkomponenten der Kurzzeitbetragsspektren eine Mehrzahl von Subbandsignalen zu bilden;
    c) es ist eine Mehrzahl von adaptiven Filtern (12) vorgesehen, um die Impulsantwort eines Leitungsechos auf dem Dialogpfad des Spracheingabedialogsystems für jedes der Subbandsignale in Form von Subbandechosignalen nachzubilden;
    d) es sind Adaptionsmittel (21) vorgesehen, denen die Subbandsignale zugeführt werden, welche einen NLMS Algorithmus durchführen, um die adaptiven Filter anzupassen;

e) es sind Bandwiederherstellungsmittel (40) vorgesehen, um aus den Subbandechosignalen ein einbandiges Signal in Form eines Echosignales zu bilden, was dem angenäherten Echo auf dem Dialogpfad des Spracheingabedialogsystems entspricht; und

e) es sind Subtraktionsmittel vorgesehen, um das Echosignal von dem Kurzzeitspektrum des eingegebenen Sprachsignales (6) zu subtrahieren.

2. Echosperre nach Anspruch 1,
bei der in den Bandreduktionsmitteln (31) Gruppierungsmittel vorgesehen sind, um die Frequenzkomponenten der Magnitudenspektren bei der Bildung der Subbandsignale zu gruppieren.

3. Echosperre nach einem der vorangehenden Ansprüche,
bei der Abtastmittel vorgesehen sind, um die Subbandsignale mit gegenüber der Abtastrate des Sprachsignales und der Spracheingabeaufforderung verminderter Abtastrate zu samplen.

4. Echosperre nach Anspruch 3,
bei der eine adaptive Echosperrung durchgeführt wird, indem eine reduzierte Anzahl von Subbändern M mit einer reduzierten Abtastrate abgetastet wird, wobei die Anzahl der Subbänder M kleiner gewählt wird, als der Betrag des Abtastreduktionsfaktors R.

5. Echosperre nach einem der vorangehenden Ansprüche,
bei der die Mehrzahl der Subbandsignale dadurch erhalten wird, daß die Fast-Fourier-Transformationsmittel (30) zusammen mit den Bandreduktionsmittel (31) eingesetzt werden.

6. Echosperre nach einem der vorangehenden Ansprüche,
bei der der Abtast-Reduktionsfaktor zu 80 gesetzt wird und die Abtastrate vor dem Heruntersamplen 8 kHz beträgt und bei dem die Länge der Fast-Fourier-Transformationsmittel zu 128 gesetzt wird und die reduzierte Anzahl der Subbänder 24 beträgt.

7. Verfahren zum Betrieb einer Echosperre nach einem der vorangehenden Ansprüche, bei der jedes Subband $X_i$ gemäß

$$X_i = \sqrt{\sum_k x_k^2}, i = i(k) \qquad\qquad (4)$$

bestimmt wird, wozu die Summe über alle Frequenzkomponenten $X_k$ jener Magnitudenspektren gebildet wird, die in einem Subband zusammengefaßt werden.

8. Verfahren nach Anspruch 7,
bei der die Anzahl der Subbandsignale, welche von den Kurzzeitmagnitudenspektren des eingegebenen Sprachsignales (6) zu subtrahieren sind, wieder hergestellt werden, indem jeden Subbandsignal $Y_i$, welches die Magni-tude eines Echosignales im Subband i angibt, mit einem Koeffizienten $1/\sqrt{w_i}$ multipliziert wird, wobei $w_i$ die Breite eines Subbandes i angibt, welche der Anzahl der im Subband zusammengefaßten Spektren entspricht und bei dem die Bandwiederherstellung in umgekehrter Weise durchgeführt wird und mit der umgekehrten Zuordnung wie bei der Zerlegung des Originalsignales in die Subbänder.

9. Echosperre nach einem der Ansprüche 1 bis 6 zur Verwendung in einem Mensch-/Maschine-Dialogsystem,
**dadurch gekennzeichnet,**
**daß** die wiederhergestellten Spektren des eingegebenen Sprachsignales (6) direkt einer Merkmalsextraktionsstufe (2) eines Spracherkenners (3) zugeführt werden, nachdem die geschätzten Echospektren subtrahiert wurden.

**Claims**

1. Echo canceller for a voice input dialogue system having the following features:

a) fast-Fourier-transform means (30) are provided in order to generate short-time amplitude spectra of at least one system input prompt (4) and one input voice signal (6);

b) band-reduction means (31) are provided to which are input the short-time amplitude spectra in order to generate a plurality of subband signals from the frequency components of the short-time amplitude spectra;

c) a plurality of adaptive filters (12) are provided in order to model the impulse response of a line echo on the dialogue path of the voice input dialogue system for each of the subband signals in the form of subband echo signals;

d) adaptation means (21) are provided to which the subband signals are input, which implement an NLMS algorithm in order to adapt the filter;

e) band-restoration means (40) are provided in order to generate from the subband echo signals a single-band signal in the form of an echo signal that corresponds to the approximated echo on the dialog path of the voice input dialogue system; and

f) subtraction means are provided in order to subtract the echo signal from the short-time spectrum of the input voice signal (6).

2. Echo canceller according to Claim 1,
in which grouping means are provided in the band-reduction means (31) in order to group the frequency components of the amplitude spectra in the generation of the subband signals.

3. Echo canceller according to one of the preceding claims,
in which sampling means are provided in order to sample the subband signals at a reduced sampling rate compared with the sampling rate of the voice signal and the voice input prompt.

4. Echo canceller according to Claim 3,
in which an adaptive echo cancellation is performed by sampling a reduced number of subbands M at a reduced sampling rate, the number of subbands M being selected to be less than the value of the sampling reduction factor R.

5. Echo canceller according to one of the preceding claims,
in which the plurality of subband signals are obtained by the fast-Fourier-transform means (30) being used with the band-reductions means (31).

6. Echo canceller according to one of the preceding claims,
in which the sampling reduction factor is set to 80 and the sampling rate before the downsampling equals 8 kHz, and in which the length of the fast-Fourier-transform means is set to 128 and the reduced number of subbands equals 24.

7. Method for operating an echo canceller according to one of the preceding claims,
in which each subband $X_i$ is defined by

$$X_i = \sqrt{\sum_k x_k^2}, i = i(k) \qquad (4)$$

which is the summation over all frequency components $X_k$ of those amplitude spectra grouped in a subband.

8. Method according to Claim 7,
in which the number of subband signals that are to be subtracted from $_\wedge$the short-time amplitude spectra of the input voice signal (6), are restored by multiplying every subband signal $Y_i$, which gives the amplitude of an echo signal in the subband i, by a coefficient $1/\sqrt{w_i}$, where $w_i$ gives the width of a subband i, which equals the number of spectra grouped in the subband, and in which the band restoration is performed in the reverse way and using the inverse assignment to that employed in the decomposition of the original signal into the subbands.

9. Echo canceller according to one of the Claims 1 to 6 for use in a human-machine dialogue system,
**characterized in that**
the restored spectra of the input voice signal (6) are input directly to a feature extraction stage (2) of a speech recogniser (3) after the estimated echo spectra have been subtracted.

**Revendications**

1. Suppresseur d'écho pour un système de dialogue à entrée vocale ayant les caractéristiques suivantes :

   a) des moyens de transformation de Fourier rapide (30) sont prévus pour former des spectres d'amplitude à court terme d'au moins un appel d'entrée système (4) et un signal vocal entré (6) ;
   b) des moyens de réduction de bande (31 ) sont prévus, auxquels les spectres d'amplitude à court terme sont amenés pour former une pluralité de signaux de sous-bande à partir des composantes de fréquence des spectres d'amplitude à court terme ;
   c) une pluralité de filtres adaptatifs (12) est prévue pour reproduire la réponse impulsionnelle d'un écho de ligne sur le trajet de dialogue du système de dialogue à entrée vocale pour chacun des signaux de sous-bande sous la forme de signaux d'écho de sous-bande ;
   d) des moyens d'adaptation (21) sont prévus, auxquels on amène les signaux de sous-bande et qui exécutent un algorithme NLMS pour adapter les filtres adaptatifs ;
   e) des moyens de reconstitution de bande (40) sont prévus pour former, à partir des signaux d'écho de sous-bande, un signal monobande sous forme d'un signal d'écho qui correspond à l'écho approximé sur le trajet de dialogue du système de dialogue à entrée vocale ; et
   f) des moyens de soustraction sont prévus pour soustraire le signal d'écho du spectre à court terme du signal vocal entré (6).

2. Suppresseur d'écho selon la revendication 1, dans lequel des moyens de groupage sont prévus dans les moyens de réduction de bande (31 ) pour grouper les composantes de fréquence des spectres de magnitude lors de la formation des signaux de sous-bande.

3. Suppresseur d'écho selon l'une des revendications précédentes, dans lequel des moyens d'analyse sont prévus pour échantillonner les signaux de sous-bande avec une fréquence d'analyse réduite par rapport à la fréquence d'analyse du signal vocal et de l'appel d'entrée vocale.

4. Suppresseur d'écho selon la revendication 3, dans lequel on procède à une suppression d'écho adaptative en analysant un nombre réduit de sous-bandes M avec une fréquence d'analyse réduite, le nombre de sous-bandes M étant choisi de manière à être inférieur à la valeur du facteur de réduction d'analyse R.

5. Suppresseur d'écho selon l'une des revendications précédentes, dans lequel on obtient la pluralité de signaux de sous-bande en utilisant les moyens de transformation de Fourier rapide (30) en même temps que les moyens de réduction de bande (31 ).

6. Suppresseur d'écho selon l'une des revendications précédentes, dans lequel le facteur de réduction d'analyse est fixé à 80 et la fréquence d'analyse avant l'échantillonnage vers le bas est égale à 8 kHz et dans lequel la longueur des moyens de transformation de Fourier rapide est fixée à 128 et le nombre réduit de sous-bandes est égal à 24.

7. Méthode opératoire d'un suppresseur d'écho selon l'une des revendications précédentes, dans lequel chaque sous-bande $X_i$ est déterminée selon la formule

$$X_i = \sqrt{\sum_k x_k^2}, \ i = i(k) \qquad\qquad (4)$$

ce pour quoi on forme la somme de toutes les composantes de fréquence $X_k$ des spectres de magnitude qui sont rassemblés dans une sous-bande.

8. Procédé selon la revendication 7, dans lequel le nombre de signaux de sous-bande devant être soustraits des spectres de magnitude à court terme du signal vocal entré (6) est reconstitué en multipliant chaque signal de sous-bande $\hat{y}_i$, indiquant la magnitude d'un signal d'écho dans la sous-bande i, par un coeffcient $1/\sqrt{w_i}$, $w_i$ indiquant la largeur d'une sous-bande i qui correspond au nombre de spectres rassemblés dans la sous-bande, et dans lequel la reconstitution de bande est exécutée d'une manière inverse et avec l'allocation inverse telle qu'elle a été exécutée lors de la décomposition du signal original en sous-bandes.

9. Suppresseur d'écho selon l'une des revendications 1 à 6 destiné à être utilisé dans un système de dialogue homme-machine, **caractérisé en ce que** les spectres reconstitués du signal vocal entré (6) sont amenés directement à un étage d'extraction de caractéristiques (2) d'un dispositif de reconnaissance vocale (3) après soustraction des spectres d'écho estimés.

FIG 1

**FIG 2**

FFT — 30

$x_1$ ... $x_N$ — 31

21

20

$X_1$ $X_2$ $X_M$

$A_1$ $\underline{c}_1$

$A_2$ $\underline{c}_2$

$A_M$ $\underline{c}_M$ — 12

$\hat{Y}_1$ $\hat{Y}_2$ $\hat{Y}_M$

$e_1$

$e_2$

$e_M$

31 $y_1$ 30

$Y_1'$

$Y_2'$

FFT

$Y_M'$

6

y

$y_M$

42 — 40

41

$e_1$

$e_N$

1

4

x

2

3